# EUROPEAN PATENT APPLICATION

(11) **EP 1 607 846 A2**
(43) Date of publication of application: **21.12.2005**
(21) Application number: 04014447.9
(22) Date of filing: 21.06.2004
(51) Int. Cl.: G06F 3/033

(54) **A portable wireless terminal device with a wireless mouse**

(30) Priority: 17.06.2004 CN 200420066313
(71) Applicant: Partner Tech. Corporation, Shintien Taipei (TW)
(72) Inventor: Yueh, Wen-Hsiang, Sinjhuang City Taipei County Taiwan 242 (CN)
(74) Representative: UEXKÜLL & STOLBERG

(57) **Abstract**

A portable wireless terminal device includes a wireless host and a wireless mouse pen. The wireless mouse pen can be operated on a plane and wirelessly signal a cursor control signal to the wireless host. The wireless mouse pen comprises a penholder, a circuit board, and a cursor control mechanism. For the purpose and effect of the invention, the penholder is a hollow shaft; the circuit board is mounted inside the penholder and performs a mouse circuit and a radio transmitting circuit such that the signal generated by the mouse circuit will be signaled by the radio transmitting circuit; and the cursor control mechanism is mounted inside the front opening of the penholder and electrically connected to the aforementioned circuit board to enable the operation of the mouse circuit.

## Description

### BACKGROUND OF THE INVENTION

### FIELD OF THE INVENTION

The present invention is related to a portable wireless terminal device with a wireless mouse pen, which can wirelessly signal a cursor control signal to a notebook, or can be used in a PDA(Personal Digital Assistant) by the operation of handwriting capability.

### DESCRIPTION OF PRIOR ART

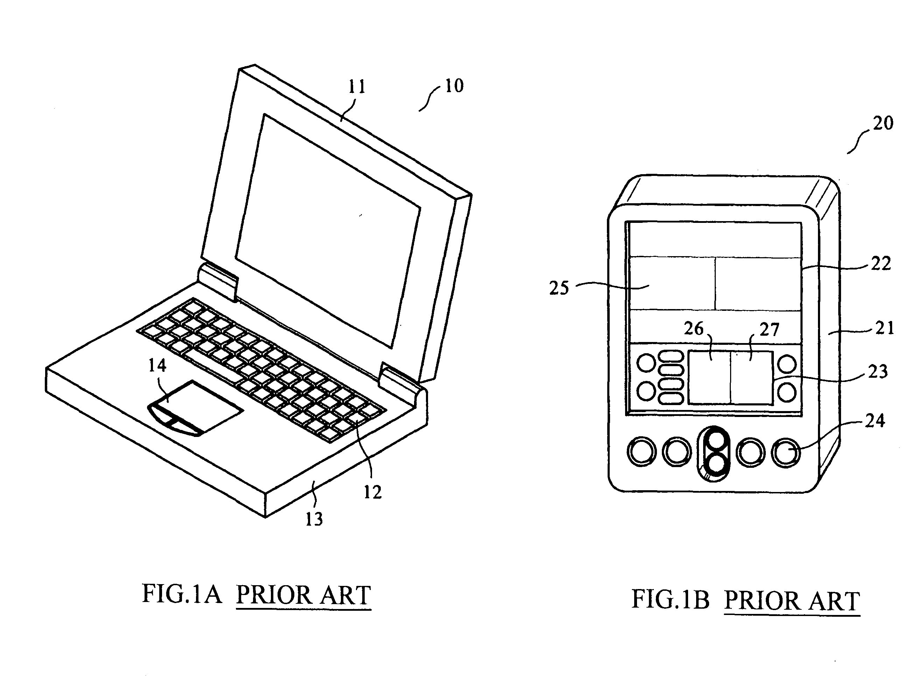

As shown in Fig 1A, referring to a perspective view of a conventional notebook 10 provided with a handwriting board or touch board 14, the notebook 10 is mainly composed of the following modules: the screen 11, the keyboard 12, and the body 13, in which: the aforementioned screen 11 and the body 13 are jointed together through a hinge device; the aforementioned keyboard 12 is set up on the aforementioned body 13; a touch board 14 is set up on the aforementioned body 13 and could be touched by a user's finger to sense the displacement of the finger, in order to transmit the displacement signal to the notebook 10 to control the position of the cursor on the control screen 11.

Then as shown in Fig 1B, referring to a perspective view of a conventional Personal Digital Assistant (PDA)device 20 provided with a touch window 23, the PDA 20 is mainly composed of : the housing 21, the screen 22, the touch window 23, and the function key 24, in which: the aforementioned screen 22 is provided with a Chinese word inputting region 25; the aforementioned touch window 23 is provided with an English word inputting region 26 and a numeral inputting region 27, when inputting the data by a touch pen, it can achieve the function of the data inputting by using the function of the handwriting board to input these word data word by word with a touch pen in a specific inputting region according to the word type to be inputted.

### SUMMARY OF THE INVENTION

The conventional notebook is provided with a touch board to control the position of the notebook's cursor, but the tendency of a user still being familiar with the operation of a handheld mouse device often results that the user will carry an additional mouse device to connect an exterior notebook with which it will cooperate, as a result, the utilization of the handwriting board or the touch board will reduce, and it has the disadvantage that the handwriting board or the touch board will lose the meaning of setting up and only be set up without being used. Moreover, a Personal Digital Assistant device itself has no keyboard such as one used in a desktop computer or a notebook, and the Personal Digital Assistant device emphasizes a light, thin, short and small volume, so when a user is inputting data, he only can input word data word by word using the handwriting function in a specific range of inputting region on the touch window, so that the user can not input conveniently.

One objective of the present invention is to provide a portable wireless terminal device with a wireless mouse pen, in which the wireless mouse pen is conveniently operated on a plane and can wirelessly signal a cursor control signal to a wireless host, such as a lap-top computer or a personal digital assistant device.

To achieve abovementioned purposes, a portable wireless terminal device with a wireless mouse pen includes a wireless host, such as a notebook or a Personal Digital Assistant device, which can wirelessly receive signal and is provided with a slot for accommodating the aforementioned wireless mouse pen; and the wireless mouse pen, which comprises a penholder made of a long strip of hollow shaft, and an opening is set up on at least one side of the penholder; a circuit board which is mounted inside the aforementioned penholder, the circuit board is equipped with batteries and performs a mouse circuit and a radio transmitting circuit such that the cursor control signal and the mouse button signal generated by the mouse circuit will be signaled by the radio transmitting circuit in the manner of radio signaling; and a cursor control mechanism, which is fixed inside the front opening of the penholder and electrically connected to the aforementioned circuit board to enable the operation of the mouse circuit, the cursor control mechanism can sense the amount of displacement of the penholder's front side, so as to cause the mouse circuit to generate the cursor control signal.

### BRIEF DESCRIPTION OF THE DRAWINGS

FIG 1A is a perspective view of a conventional notebook;
FIG 1B is a perspective view of a conventional Personal Digital Assistant device;
Fig 2A is a perspective view of a lap-top computer utilizing a portable wireless terminal device with a wireless mouse pen of this invention;
Fig 2B is a perspective view of a personal digital assistant device utilizing a portable wireless terminal device with a wireless mouse pen of this invention;
Fig 3 is a circuit block diagram of a wireless mouse pen of this invention; and
Fig 4 is a side cross-sectional view of a wireless mouse pen according to an embodiment of this invention.

### DETAILED DESCRIPTION OF THE INVENTION

First referring to Fig 2A, which shows a portable wireless terminal device with a wireless mouse pen of this invention applied to a lap-top computer 30. In this embodiment, the lap-top computer 30 of this invention is provided with a wireless mouse pen which is in the shape of a pen and convenient for handling to write, and the wireless mouse pen can wirelessly signal a cursor control signal. A plurality of buttons which are used as the function of mouse buttons are projected from the side of the pen body of the wireless mouse pen 100. In a preferred embodiment, the button on the side of the pen body of the wireless mouse pen 100 is a scroll button, thereby the instruction functions of Page Up and Page Down of a general keyboard could be further provided by the action of the scroll.

The portable wireless terminal device of this invention comprises a wireless host, in this embodiment, the wireless host is embodied as a lap-top computer 30 having the function of wireless receiving. The lap-top computer 30 is equipped with a wireless mouse pen 100 as the cursor controller, so the lap-top computer 30 can remove the touch handwriting board to obtain more space. The lap-top computer 30 which comprises modules such as the screen 31, the keyboard 32, and the body 33 is characterized that: a slot 34 which is for accommodating the aforementioned wireless mouse pen 100 is set up on the aforementioned screen 31, and the aforementioned screen 31 and the body 33 are jointed together through a hinge device; the aforementioned keyboard 32 is set up on one side of the aforementioned body 33; after removing the touch handwriting board, the aforementioned body 33 can obtain the space for setting up the speaker 35. This is an illustrative embodiment.

While operating the lap-top computer 30, the aforementioned wireless mouse pen 100 will be taken out from the slot 34 of the aforementioned lap-top computer 30 to slide on any plane, the cursor position of the lap-top computer 30 system could be operated by wirelessly communicating the cursor control signal to the lap-top computer 30, thereby making it convenient for inputting by handwriting operation.

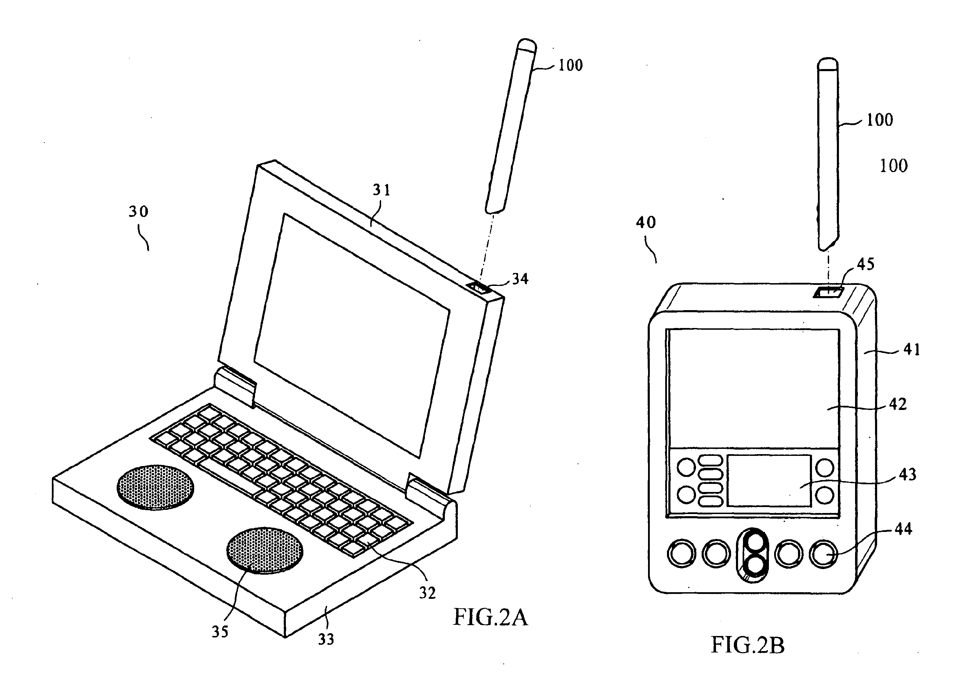

Then referring to Fig 2B, which shows a portable wireless terminal device with a wireless mouse pen of this invention applied to a PDA device 40. In this embodiment, the PDA device 40 of this invention is provided with a wireless mouse pen 100 which is in the shape of a pen and convenient for handling to write. A plurality of buttons which are used as the function of mouse buttons are projected from the side of the pen body of the portable wireless terminal device with the wireless mouse pen 100. In a preferred embodiment, the button on the side of the pen body of the portable wireless terminal device with the wireless mouse pen 100 is a scroll button, thereby the instruction functions of Page Up and Page Down of a general keyboard could be further provided by the action of the scroll.

The portable wireless terminal device of this invention comprises a wireless host, in this embodiment, the wireless host is embodied as a PDA device 40 having the function of wireless receiving. The PDA device 40 is equipped with a wireless mouse pen 100 such that the handwriting input function could be performed by means of the wireless mouse pen 100 without being limited to the use of its touch window 43. The aforementioned PDA device 40 which comprises a housing 41 a screen 42 a touch window 43 and function keys 44 is characterized that: a slot 45 which is for accommodating the wireless mouse pen 100 is set up on the upper side of the aforementioned housing 41; the aforementioned screen 42, the touch window 43 and those function keys 44 are all set up on the aforementioned housing 41.

While operating the PDA device 40, the aforementioned wireless mouse pen 100 will be taken out from the slot 45 of the aforementioned PDA device 40 to operate in the manner of handwriting on any plane for inputting data and wirelessly communicating the cursor control signal to the PDA device 40, thereby making it convenient for the handwriting operation of the PDA device 40.

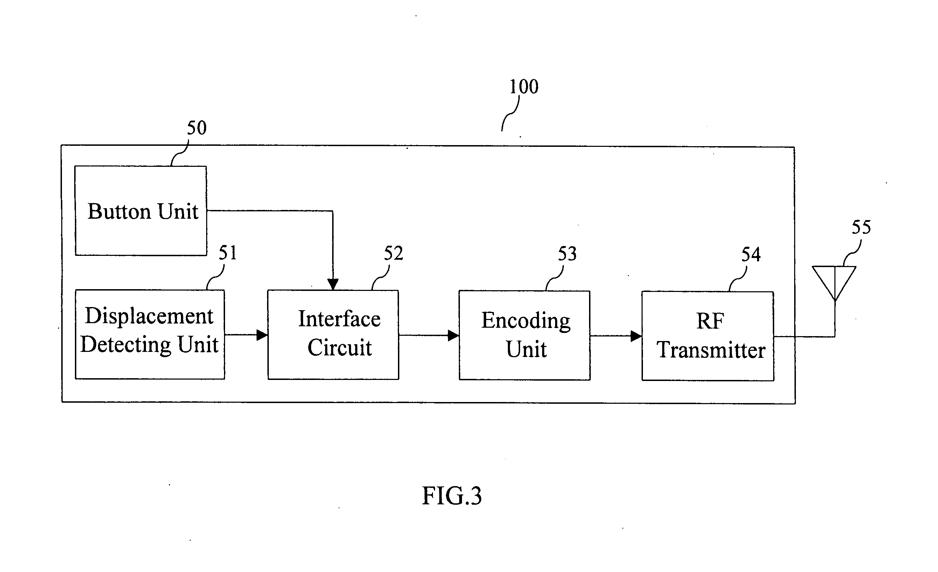

Referring to Fig 3, which shows a circuit block diagram of the wireless mouse pen 100 of this invention. The wireless mouse pen comprises a button unit 50, a displacement detecting unit 51, an interface circuit 52 ,an encoding unit 53, a RF transmitter 54, and an antenna 55. While the wireless mouse pen 100 is under operation, the displacement detecting unit 51 will sense the displacement of the wireless mouse pen 100 operated by an user, in order to generate a displacement signal. The interface circuit 52 may convert the displacement signal received and the button signal detected from the button unit 50 into electronic signal. After being encoded by the encoding unit 53, the displacement signal and the button signal will be wirelessly signaled back by the RF transmitter 54 to the wireless host.

In an embodiment of this invention, the wireless mouse pen 100 may be an photoelectric wireless mouse device; and the displacement detecting unit 51 is implemented as an photoelectric displacement detecting unit, which can sense the movement of the wireless mouse pen 100 on a plane by the reflection of a laser light.

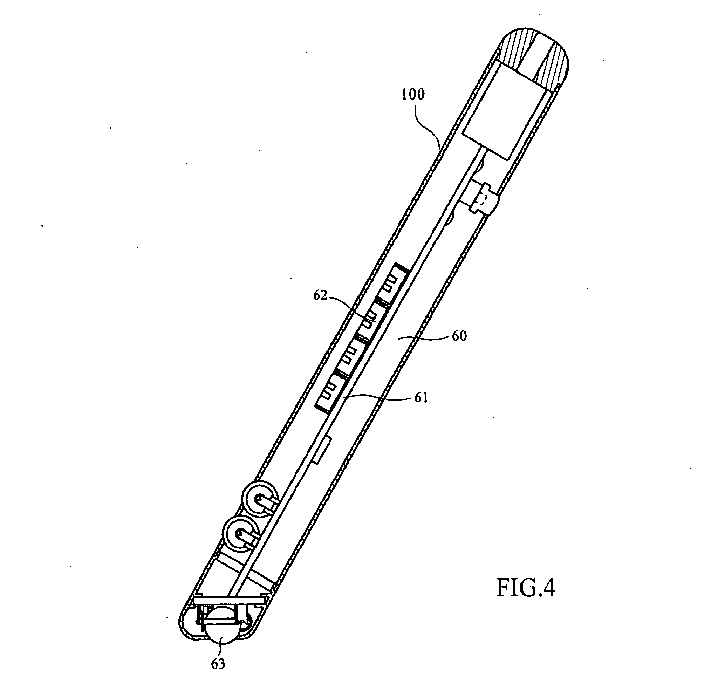

Referring to Fig 4, which shows a side cross-sectional view of an embodiment of the wireless mouse pen of this invention. The wireless mouse pen 100 comprises a penholder 60 made of a long strip of hollow shaft, and an opening is set up on at least one side of the penholder; a circuit board 61, which is mounted inside the aforementioned penholder 60, the circuit board 61 is equipped with batteries 62 and performs a mouse circuit and a radio transmitting circuit shown as the circuit block diagram in Fig 3, such that the cursor control signal and the mouse button signal generated by the mouse circuit will be signaled by the radio transmitting circuit in the manner of radio signaling; and a cursor control mechanism 63, which is fixed inside the front opening of the penholder 60 and electrically connected to the aforementioned circuit board 61 to enable the operation of the mouse circuit, the cursor control mechanism 63 can sense the amount of displacement of the front side of the penholder 60, so as to cause the mouse circuit to generate the cursor control signal.

In such an embodiment of this invention, the cursor control mechanism 63 may be a mechanical displacement sensor, which comprises a ball, and two approaching wheels which are disposed with each other vertically. The relative position between the ball and these two approaching wheels is disposed on a small circuit board, such that the rolling of the ball may roll these two approaching wheels in the vertical direction, and each side of the approaching wheel is provided with a raster wheel for detecting the rotation of the approaching wheel in coordination with a light coupling element. The signal outputted from this light coupling element will be transmitted to the mouse circuit to be used as a cursor control signal. In another embodiment of this invention, the cursor control mechanism 63 may be an optical displacement sensor, which comprises a light emitting element and a light receiving element. Those skilled in the art of detecting the displacement of the front side of the penholder 60 by optical way can easily mount the optical displacement sensor as the cursor control mechanism 63 on the front opening of the penholder 60.

While the preferred embodiments of the present invention have been described in detail, those skilled in the art will clearly understand that various modifications and changes can be made thereto without departing from the spirit of the present invention, and the present invention should not be limited to the implementations of the embodiments of the specification.

## Claims

1. A portable wireless terminal device, comprising:
a wireless host, which has a wireless receiving module and is provided with a slot; and
a wireless mouse pen, accommodated in said slot, comprising:
a penholder, which is a hollow shaft;
a circuit board, which is mounted inside said penholder, the circuit board performs the function of a mouse circuit and a radio transmitting circuit; and
a cursor control mechanism, which is mounted inside the front end of said penholder and electrically connected to said circuit board to enable the operation of said mouse circuit, so as to cause said radio transmitting circuit to transmit a cursor control signal in the manner of radio signaling to said wireless host.

2. The portable wireless terminal device of claim 1, wherein the cursor control mechanism is a mechanical displacement sensor.

3. The portable wireless terminal device of claim 1, wherein the cursor control mechanism is an optical displacement sensor.

4. The portable wireless terminal device of claim 1, wherein said wireless mouse pen comprises a plurality of buttons, said buttons are set up on the side of the pen body and electrically connected to said circuit board, so as to cause said radio transmitting circuit to transmit said button signal in the manner of radio signaling to said wireless host.

5. The portable wireless terminal device of claim 1, wherein said wireless host is a lap-top computer having the function of wireless receiving.

6. The portable wireless terminal device of claim 1, wherein said wireless host is a personal digital assistant device having the function of wireless receiving.
